# EUROPEAN PATENT SPECIFICATION

(11) **EP 3 209 117 B1**
(45) Date of publication and mention of the grant of the patent: **31.10.2018**
(21) Application number: 15766624.9
(22) Date of filing: 07.08.2015
(51) Int. Cl.: A01K 5/01

(54) **SUPPORT COMPRISING BOWLS ABLE TO BE HUNG ON THE WALL TO PROVIDE FOOD AND WATER TO ANIMALS**
AUFLAGER MIT SCHALEN ZUM AUFHÄNGEN AN DER WAND, UM TIERE MIT FUTTER UND TRINKEN ZU VERSORGEN
SUPPORT COMPRENANT DES BOLS ACCROCHABLE AU MUR, POUR FOURNIR ALIMENTATION ET BOISSON AUX ANIMAUX

(30) Priority: 21.10.2014 IT CZ20140011 U
(43) Date of publication of application: 30.08.2017
(73) Proprietor: Bama S.p.A., 55011 Altopascio (LU) (IT)
(72) Inventor: BAIOCCHI, Renzo, 55015 Montecarlo (LU) (IT)
(74) Representative: Scorza, Federica
(86) International application number: PCT/IB2015/056008
(87) International publication number: WO 2016/063144

(56) References cited:
- GB-A- 2 441 855
- US-A- 5 144 912
- US-A1- 2004 177 815
- US-B1- 6 427 626

## Description

The present invention relates to a support comprising bowls able to be hung on the wall to provide food and water to animals.

As it is known, there are different types of feeders and troughs for animals, for example dogs, comprising one or more bowls for containment of food or water. In particular, there are feeding and drinking troughs able to be hung on the wall and comprising one or more bowls, which are not realized in plastic.

However, these known devices are generally used specifically during the meal and do not have dedicated housings for the containment of the food apart the ones dedicated to the meal. Moreover, they are not particularly compact and comfortable when used.

Some solutions have been disclosed for solving these problems.

A first known solution is described in the US patent application N. 2004/4177815 published on September 16^{th}, 2004, which discloses a diner for pet including a tray for holding food. The diner includes a housing having a chamber large enough for the pet to stand in, a doorway for entrance / exit of the pet, and a slot communicating with the chamber in which the tray removably fits and extends into the chamber.

A second solution has been disclosed in the US patent N. 6, 427, 626 issued on August 6th, 2002. This patent describes a pet feeding system having a support structure for supporting feeding vessel in an elevated position. The feeding vessel is detachable from the support structure for filling with foodstuff or for use separate from the support structure. The system also comprises an internal storage compartment for storing foodstuff.

A third solution is described in the US patent N. 5, 144, 912 issued on September 8th, 1992. An animal feeding device suitable for supporting food and water for pets comprises a support panel adapted to be secured to a vertical surface, such as wall, at a desired elevation, and a panel pivotably connected to the panel for supporting food or the like.

Even if advantageous under many aspects, these known solutions don't allow to store bowls containing food. To do that the known system should be complicated and bigger.

Scope of the present invention is to provide a support comprising bowls according to claim 1 able to be hung on the wall to provide food and water to animals, compact and convenient to use, thus having characteristics such as to overcome the limits which still affect the current devices with reference to the known art.

According to the present invention, a support comprising bowls able to be hung on the wall to provide food and water to animals is provided, as defined in claim 1.

For a better understanding of the present invention a preferred embodiment is now described, purely by way of non-limiting example, with reference to the accompanying drawings, in which:
- figure 1 shows a schematic three-dimensional view of a support comprising bowls able to be hung on the wall to provide food and water to animals, according to the invention;
- figure 2 shows a schematic three-dimensional view of the component parts of the support comprising bowls able to be hung on the wall to provide food and water to animals, according to the invention;
- figure 3 shows a schematic a three-dimensional view of a vertical panel able to be fixed to the wall of the support comprising bowls able to be hung on the wall to bowl, according to the invention;
- figure 4 shows a schematic three-dimensional view of the vertical panel of figure 4 provided with a base for bowls able to be latch inserted, according to the invention;
- figure 5 shows a schematic three-dimensional view of the vertical panel of figure 4 provided with a base for bowls able to be latch inserted and a pots holding bowl able to be latch inserted, according to the invention;
- Figures 6 and 7 show schematic three-dimensional views of the vertical panel able to be fixed to a wall provided with a basis for bowls and the pots holding bowl provided with closable lid, respectively in empty and full configuration, according to the invention;
- Figures 8A-8B show schematic three-dimensional views of the support comprising bowls to be hung on the wall for providing food and water to animals, respectively with bowls during insertion and with bowls inserted, according to the invention;
- Figures 9A-9B show schematic three-dimensional enlarged views of bowls, respectively, unlocked and locked by means of a locking knob of the support comprising bowls to be hung on the wall for providing food and water to animals, according to the invention;
- Figure 10 shows a schematic three-dimensional view of the support comprising bowls to be hung on the wall for providing food and water to animals in a mode of use by a dog, according to the invention.

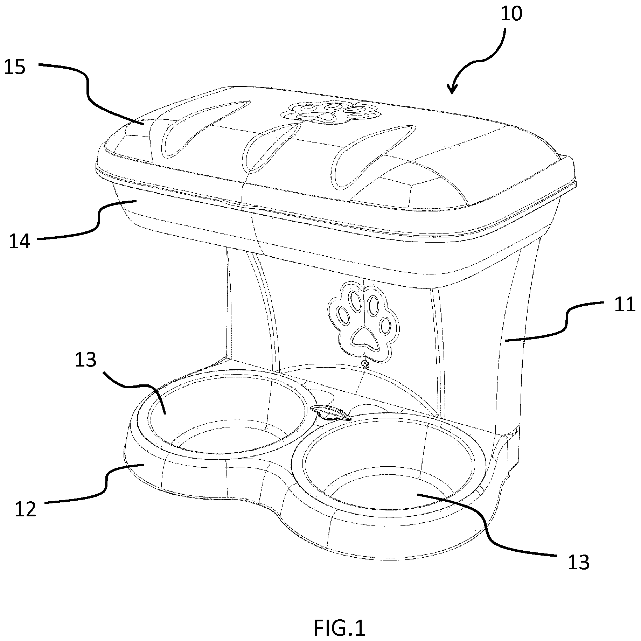

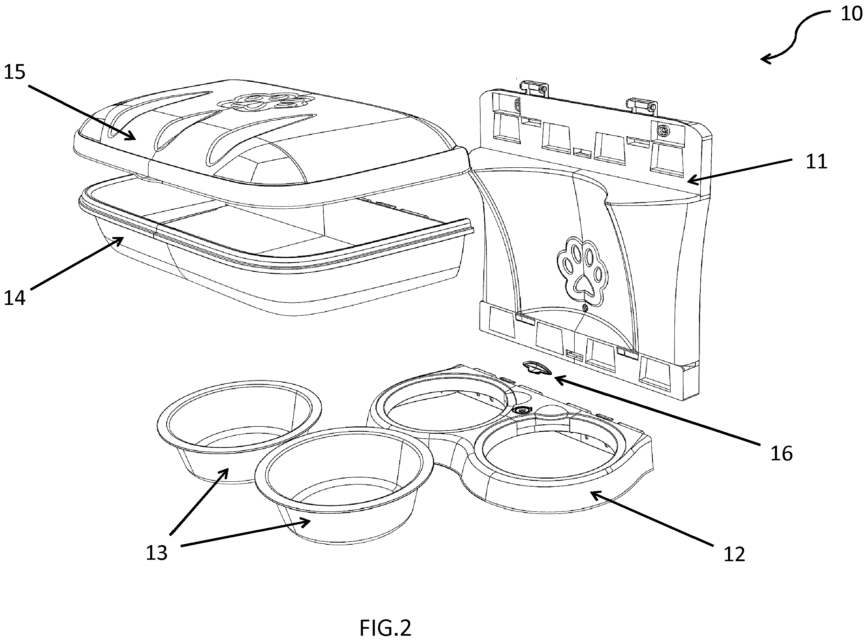

With reference to these figures and, in particular, to figure 1, a support comprising bowls to be hung on the wall for providing food and water to animals is shown, according to the invention. More in details, the support 10 comprising of bowls to hang on the wall for providing food and water to animals comprises, as shown in detail in Figure 2, a vertical panel 11 which can be fixed to the wall that serves as a load-bearing structure of the support 10, a base 12 for bowls having two compartments, each compartment for a bowl 13; a pots holding bowl 14; and a cover 15 of the pots holding bowl 14.

Advantageously according to the invention, the base 12 is locked with interlocking latch in the lower part of the vertical panel 11.

Advantageously according to the invention, the pots holding bowl 14 is blocked with interlocking latch in the upper part of the vertical panel 11.

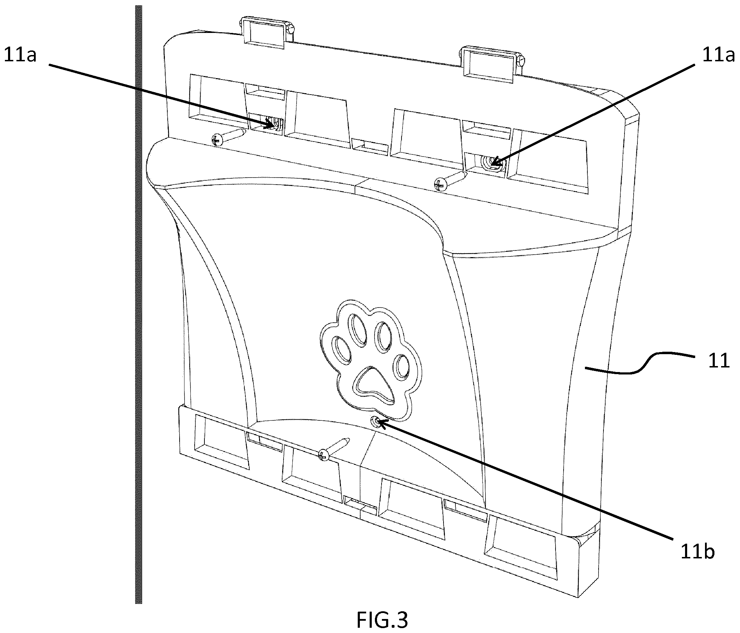

Advantageously, according to the invention, the vertical panel 11 is fixable to the wall by means of screws inserted in at least two upper holes 11a and at least one lower hole 11b, as shown in Figure 3.

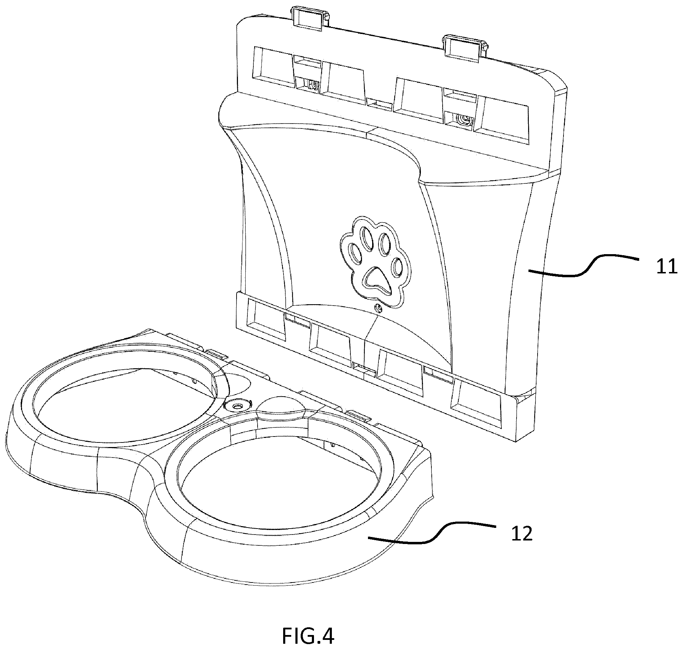

Advantageously according to the invention, the vertical panel 11 has a lower edge provided with a shaping made so as to be the mirror image in negative of a shaping present in the rear edge of the base 12. In this way it is possible the latch locking of the base 12 to the lower edge of the vertical panel 11, as shown in Figure 4.

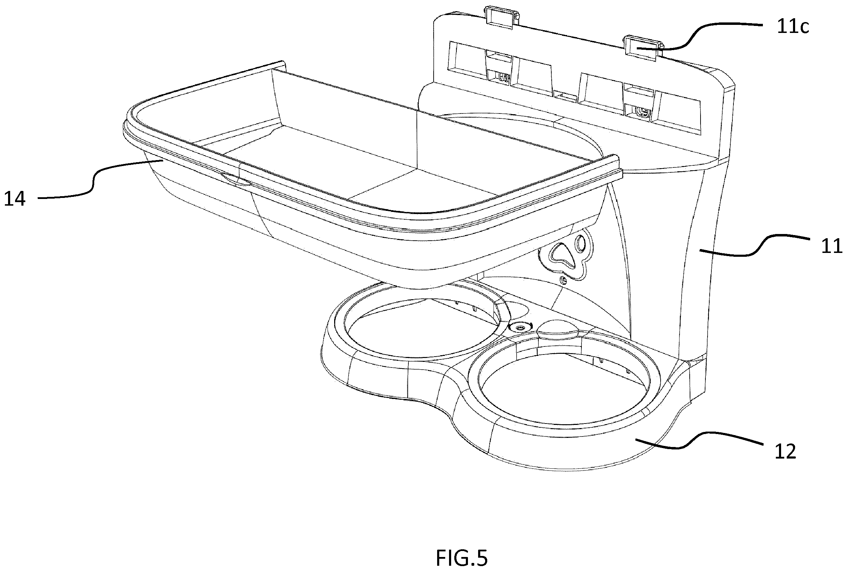

Advantageously according to the invention, the vertical panel 11 has in the upper edge a shaping made so as to be mirror image in negative of a shaping present in the rear edge of the pots holding bowl 14. In this way it is possible to latch lock the pots holding bowl 14 into the upper edge of the vertical panel 11, as shown in Figure 5.

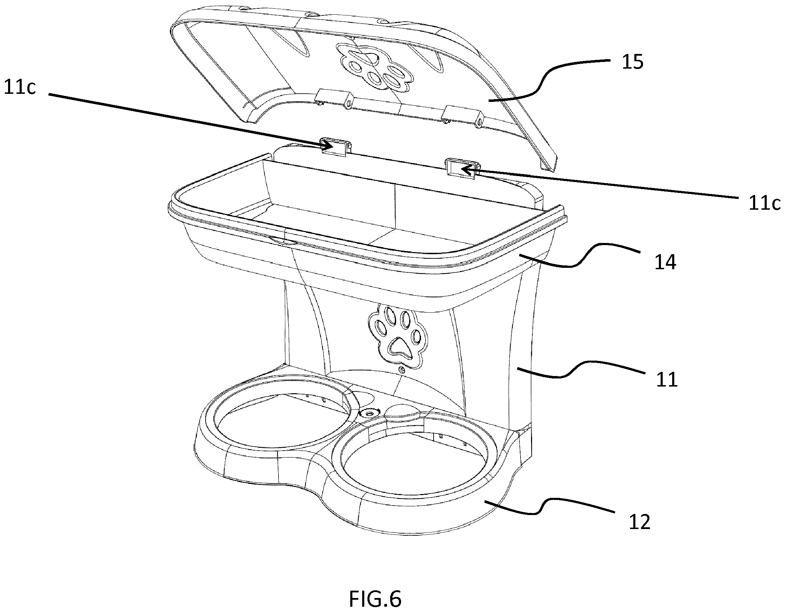

Figure 6 shows the cover 15 stuck, by means of hinges 11c of the vertical panel 11, on the pots holding bowl 14.

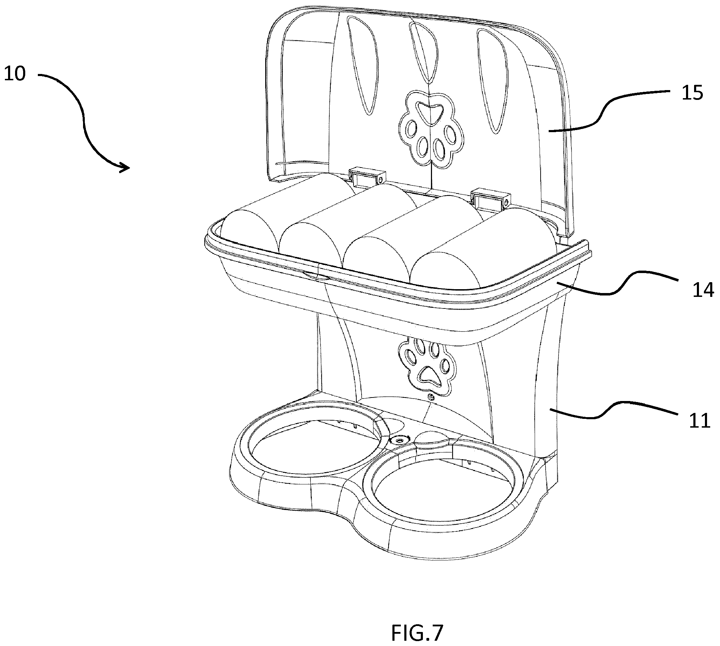

In this way, as shown in Figure 7, the user of the support 10 can conveniently store a certain number of pots containing pet food in the pots holding bowl 14 and close them inside the bowl 14 by means of the lid 15, so as to use them when needed by placing the contents of the pots within the bowls 13.

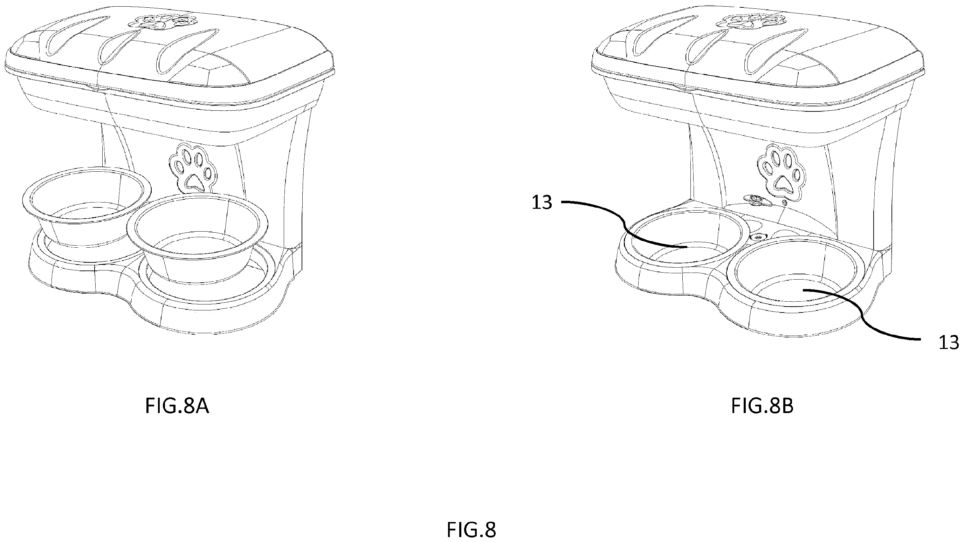

Advantageously according to the invention, the bowls 13 are attachable and detachable to / from the base 12, as shown in Figure 8, in such a way that they can be washed and cleaned comfortably.

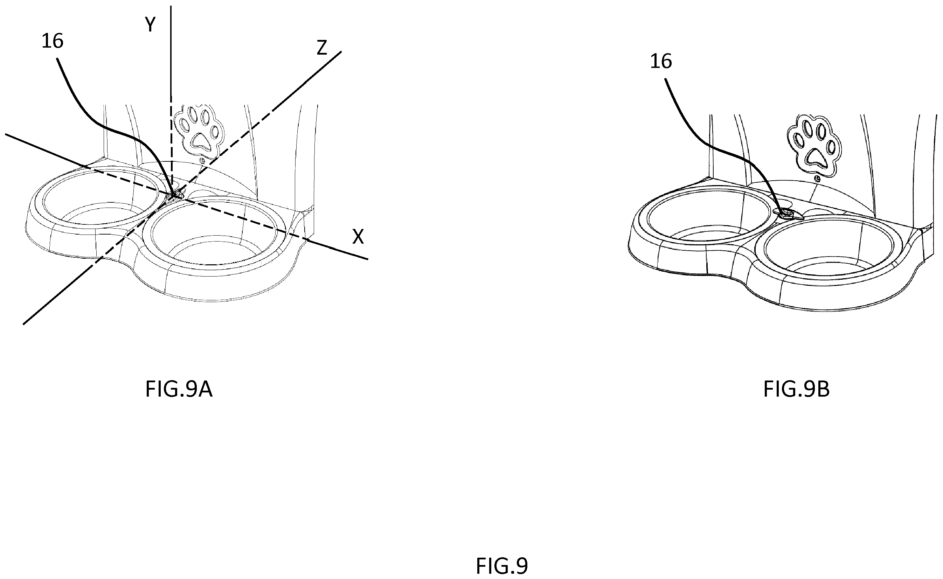

More in detail, the locking and unlocking of the bowls 13 inside the compartments comprised in the base 12 is possible by means of a locking knob 16 present on the upper surface of the base 12 in a region comprised between the two compartments. Figures 9A and 9B show the locking knob 16, respectively, in the release position and in the locking position of the bowls 16. Essentially, the knob 16 is realized by means of a pivot pin rotatable about a vertical axis Y and having at the top a lever having a fixed length oriented along a horizontal axis Z, perpendicular to the Y axis, in its release position. Following a 90° rotation around the Y axis the lever is oriented along a horizontal axis X, perpendicular to both the Y-axis which the axis Z, and, since its length is such that, in this position, its ends overlap each to the edge of a bowl 13, the lever is in the locking position of the bowls 13.

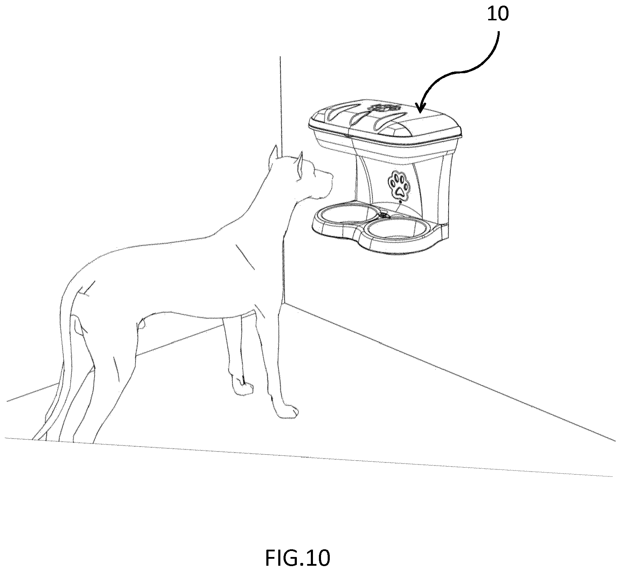

Finally, figure 10 shows the support 10 comprising bowls to be hung on the wall for providing food and water to animals in a configuration in which it is hung on the wall at a height advantageously variable depending on the height of the animal user. More clearly, the support 10 can be set by the owner at the most appropriate height relative to the size of the animal that will use it.

Advantageously according to the invention, the support 10 can be used even outdoors because the lid of the pots holding bowl also serves as a canopy to protect the bowls from rain or inclement weather.

Therefore, support comprising bowls to be hung on the wall to provide food and water to animals according to the invention allows the animal to eat comfortably without necessarily lower the head as in the case of bowls placed on the ground.

In addition, the support comprising bowls to be hung on the wall for providing food and water to animals according to the invention allows to store in the device pots of food ready for use.

Another advantage of the support comprising bowls to be hung on the wall to provide food and water to animals according to the invention is easy to be assembled and disassembled.

A further advantage of the support comprising bowls to be hung on the wall for providing food and water to animals according to the invention consists in the fact that the bowls containing water and food are securely fixed to the structure of the support.

In addition, the support comprising bowls to be hung on the wall for providing food and water to animals according to the invention is fixable at a variable height depending on the size of the animal.

Another advantage of the support comprising bowls to be hung on the wall to provide food and water to animals according to the invention is that it can be used both outdoors and indoors.

Finally, the support comprising bowls to be hung on the wall to provide food and water to animals according to the invention is cheap.

Finally it is clear that the support comprising bowls to be hung on the wall to provide food and water to animals described and illustrated here can be modified and varied without departing from the protective scope of the present invention, as defined in the appended claims.

## Claims

1. Support (10) comprising bowls to be hung on the wall for providing food and water to animals comprising:
- a bearing structure (11);
- a base (12) comprising compartments for bowls (13);
- a food container (14) able to be closed by closing means (15); and
- means (16) for locking / unlocking the bowls (13);
**characterized in that** the bearing structure (11) is a vertical panel able to be fixed to the wall and the food container (14) is a pots holding bowl configured for being latch locked at the top of the bearing structure (11) provided in the upper edge of a shaping which is the mirror image in negative of a shaping present in the rear edge of the pots holding bowl (14).

2. Support (10) comprising bowls to be hung on the wall for providing food and water to animals according to claim 1, **characterized in that** the closing means (15) is a cover stuck by means of hinges (11c) present on the bearing structure (11).

3. Support (10) comprising bowls to be hung on the wall for providing food and water to animals according to claim 1, **characterized in that** the base (12) is blocked with interlocking latch in the lower part of the bearing structure (11) provided in the lower edge of a first shaping which is the mirror image in negative of a second shaping present in the rear edge of the base (12).

4. Support (10) comprising bowls to be hung on the wall for providing food and water to animals according to claim 1, **characterized in that** said means (16) for locking / unlocking the bowls (13) is a locking knob (16) present on the upper surface of the base (12) in a region comprised between said compartments of the bowls (13) and comprising at least a pin rotatable about a vertical axis Y and an upper lever pivoting along a horizontal axis Z perpendicular to Y axis, in correspondence of an initial position of the pin, and along an axis X perpendicular to the axis Y and to Z axis, in correspondence of a final position of the pin in response to a rotation of 90° around the Y-axis of the pin.

5. Support (10) comprising bowls to be hung on the wall for providing food and water to animals according to claim 4, **characterized in that** the lever has a length such that, in said final position, its ends are each overlying the edge of a bowl (13) inserted into said compartments of the base (12).

6. Support (10) comprising bowls to be hung on the wall for providing food and water to animals according to claim 1, **characterized in** being hung on the wall at a variable height depending on the size of the animal.

## Patentansprüche

1. Träger (10), umfassend Schalen, der an die Wand zu hängen ist, zum Bereitstellen von Futter und Wasser für Tiere, umfassend:
- eine Tragstruktur (11);
- eine Basis (12), umfassend Fächer für Schalen (13);
- einen Futterbehälter (14), der dazu in der Lage ist, durch ein Schließmittel (15) geschlossen zu werden; und
- ein Mittel (16) zum Verriegeln/Entriegeln der Schalen (13);
**dadurch gekennzeichnet, dass** die Tragstruktur (11) eine vertikale Platte ist, die dazu in der Lage ist, an der Wand befestigt zu werden, und der Futterbehälter (14) eine töpfehaltende Schale ist, die dazu ausgelegt ist, mit einem Riegel an der Oberseite der Tragstruktur (11) verriegelt zu werden, die in der Oberkante einer Gestaltung vorgesehen ist, die das negative Spiegelbild einer Gestaltung ist, die in der Hinterkante der töpfehaltenden Schale (14) vorhanden ist.

2. Träger (10), umfassend Schalen, der an die Wand zu hängen ist, zum Bereitstellen von Futter und Wasser für Tiere nach Anspruch 1, **dadurch gekennzeichnet, dass** das Schließmittel (15) ein mittels Scharnieren (11c), die an der Tragstruktur (11) vorhanden sind, befestigter Deckel ist.

3. Träger (10), umfassend Schalen, der an die Wand zu hängen ist, zum Bereitstellen von Futter und Wasser für Tiere nach Anspruch 1, **dadurch gekennzeichnet, dass** die Basis (12) mit einem Verriegelungsriegel im unteren Teil der Tragstruktur (11) blockiert wird, die in der Unterkante einer ersten Gestaltung vorgesehen ist, die das negative Spiegelbild einer zweiten Gestaltung ist, die in der Hinterkante der Basis (12) vorhanden ist.

4. Träger (10), umfassend Schalen, der an die Wand zu hängen ist, zum Bereitstellen von Futter und Wasser für Tiere nach Anspruch 1, **dadurch gekennzeichnet, dass** das Mittel (16) zum Verriegeln/Entriegeln der Schalen (13) ein Verriegelungsknopf (16) ist, der an der Oberseite der Basis (12) in einem Bereich vorhanden ist, der zwischen den Fächern der Schalen (13) enthalten ist, und umfassend mindestens einen Stift, der um eine vertikale Y-Achse drehbar ist, und einen oberen Hebel, der entlang einer horizontalen Z-Achse senkrecht zu der Y-Achse, in Übereinstimmung mit einer Ausgangsposition des Stifts, und entlang einer X-Achse senkrecht zu der Y-Achse und zu der Z-Achse, in Übereinstimmung mit einer Endposition des Stifts als Reaktion auf eine Drehung des Stifts von 90° um die Y-Achse, schwenkt.

5. Träger (10), umfassend Schalen, der an die Wand zu hängen ist, zum Bereitstellen von Futter und Wasser für Tiere nach Anspruch 4, **dadurch gekennzeichnet, dass** der Hebel eine Länge derart aufweist, dass seine Enden, in der Endposition, jeweils die Kante einer Schale (13), die in die Fächer der Basis (12) eingesetzt ist, überlagern.

6. Träger (10), umfassend Schalen, der an die Wand zu hängen ist, zum Bereitstellen von Futter und Wasser für Tiere nach Anspruch 1, **dadurch gekennzeichnet, dass** er in einer variablen Höhe abhängig von der Größe des Tiers an die Wand gehängt wird.

## Revendications

1. Un support (10) comprenant des gamelles destinées à être accrochées au mur pour nourrir et abreuver les animaux, comprenant :
- une structure de support (11) ;
- une base (12) comprenant des compartiments pour les gamelles (13) ;
- un récipient alimentaire (14) pouvant être fermé au moyen de dispositifs de fermeture (15) ; et
- des dispositifs (16) de verrouillage/déverrouillage des gamelles (13) ;
**caractérisé en ce que** la structure de support (11) est un panneau vertical pouvant être fixé au mur et que le récipient alimentaire (14) est constitué d'un casier conçu pour être verrouillé par un verrou sur la partie supérieure de la structure de support (11) et situé sur la partie supérieure d'un profil qui est une image miroir en négatif d'un profil présent sur la partie arrière du casier (14).

2. Un support (10) comprenant des gamelles destinées à être accrochées au mur pour nourrir et abreuver les animaux selon la revendication 1, **caractérisé en ce que** les dispositifs de fermeture (15) sont un couvercle coincé par des charnières (11c) présentes sur la structure de support (11) .

3. Un support (10) comprenant des gamelles destinées à être accrochées au mur pour nourrir et abreuver les animaux selon la revendication 1, **caractérisé en ce que** la base (12) est bloquée par un verrou sur la partie inférieure de la structure de support (11) et située sur la partie supérieure d'un premier profil qui est une image miroir en négatif d'un second profil présent sur la partie arrière de la base (12).

4. Un support (10) comprenant des gamelles destinées à être accrochées au mur pour nourrir et abreuver les animaux selon la revendication 1, **caractérisé en ce que** lesdits dispositifs (16) de verrouillage/déverrouillage des gamelles (13) sont un bouton de verrouillage (16) situé sur la surface supérieure de la base (12) dans une région comprise entre lesdits compartiments pour gamelles (13) et comprenant au moins une goupille pouvant être tournée autour d'un axe Y vertical et un levier supérieur pivotant le long d'un axe Z horizontal perpendiculaire à l'axe Y, en correspondance avec la position initiale de la goupille, et le long d'un axe X perpendiculaire à l'axe Y et à l'axe Z, en correspondance avec la position finale de la goupille résultant d'une rotation de 90° autour de l'axe Y de la goupille.

5. Un support (10) comprenant des gamelles destinées à être accrochées au mur pour nourrir et abreuver les animaux selon la revendication 4, **caractérisé en ce que** la longueur du levier est telle que dans ladite position finale, les deux extrémités du levier chevauchent chacune le bord d'une gamelle (13) insérée dans lesdits compartiments de la base (12) .

6. Un support (10) comprenant des gamelles destinées à être accrochées au mur pour nourrir et abreuver les animaux selon la revendication 1, **caractérisé en ce qu'**il est accroché au mur à une hauteur variable en fonction de la taille de l'animal.
